# EUROPEAN PATENT SPECIFICATION

(11) **EP 1 106 053 B1**
(45) Date of publication and mention of the grant of the patent: **14.04.2004**
(21) Application number: 00203987.3
(22) Date of filing: 14.11.2000
(51) Int. Cl.: A01D 78/10

(54) **A haymaking machine**
Heuwerbungsmaschine
Machine de fenaison

(30) Priority: 03.12.1999 NL 1013735
(43) Date of publication of application: 13.06.2001
(73) Proprietor: MAASLAND N.V., 3147 PA Maassluis (NL)
(72) Inventor: van den Engel, Alfonsus Jacobus, 3123 CM Schiedam (NL)
(74) Representative: Corten, Maurice Jean F.M.

(56) References cited:
- EP-A- 0 296 666
- EP-A- 0 464 387
- EP-A- 0 812 531
- DE-A- 19 625 732
- FR-A- 2 157 364

## Description

The invention relates to a haymaking machine, in particular a tedder, provided with a first frame with motor-drivable crop working elements, according to the preamble of claim 1.

Such a haymaking machine is known, for example from the document DE-196 25 732-A1. In this document a haymaking machine is described with a central frame to which drivable rotors are attached. Parallel along this frame at some distance therefrom a stabilisation frame is attached with a front part and a back part. The stabilisation frame is connected to the central frame by means of cross bars and comprises several frame sections, pivotably attached to each other.

The invention aims at providing an alternative haymaking machine.

According to the invention this is achieved in that the U-shaped or V-shaped frame section is located near the middle of the haymaking machine.

By means of the reinforcement frame especially the horizontal forces that are exerted on the haymaking machine can be absorbed and thus an extra stiffness of the first frame is guaranteed. According to a first embodiment of the invention, the coupling means comprise a hinged connection. According to a preferred embodiment of the invention, the hinged connection is designed as a fork connection. According to again another embodiment of the invention, it is also possible for the coupling means to comprise a sliding connection. According to an inventive feature, the reinforcement frame is disposed at some distance from the first frame. According to a further inventive feature, the reinforcement frame is connected to the first frame by means of at least one support. According to a further inventive feature, the U-shaped or V-shaped frame section is located near the middle of the haymaking machine. The latter measure has the advantage that there is obtained more space behind the reinforcement frame, so that it is possible for a drive for a further group of crop working elements to be fitted there. For an optimal absorption of horizontal forces the U-shaped or V-shaped frame section is connected to a coupling trestle by means of which the haymaking machine can be coupled to the tractor or a similar vehicle. Thus the horizontal forces are transferred directly to the tractor or a similar vehicle via the reinforcement frame and the U-shaped or V-shaped frame section via the coupling trestle. The haymaking machine further comprises, viewed in the direction of travel thereof, obliquely arranged (draw)bars which are preferably adjustable in length and which are disposed between the first frame and the reinforcement frame. According to a further inventive feature, viewed in the direction of travel of the haymaking machine, the reinforcement frame is located behind the first frame. According to another aspect of the invention, the reinforcement frame is disposed across at least half of the width of the haymaking machine. According to again another inventive feature, the reinforcement frame comprises five frame sections. According to again another aspect of the invention, the first frame and the reinforcement frame are located in one horizontal plane. In a preferred embodiment of the invention, in the operating position of the haymaking machine, the reinforcement frame is 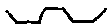 -shaped in plan view. According to again another inventive feature, the haymaking machine comprises at least eight drivable crop working elements. According to an inventive feature, for bringing the haymaking machine into the transport position, at least a part of the first frame and a number of frame sections of the reinforcement frame are capable of being folded up.

The invention will now be explained in further detail with reference to the accompanying drawings, in which:
Figure 1 is a plan view of a haymaking machine according to the invention, said haymaking machine being provided with a reinforcement frame according to the invention;
Figure 2 is a rear view of the coupling means according to the invention, and
Figure 3 is a plan view of the coupling means shown in Figure 2.

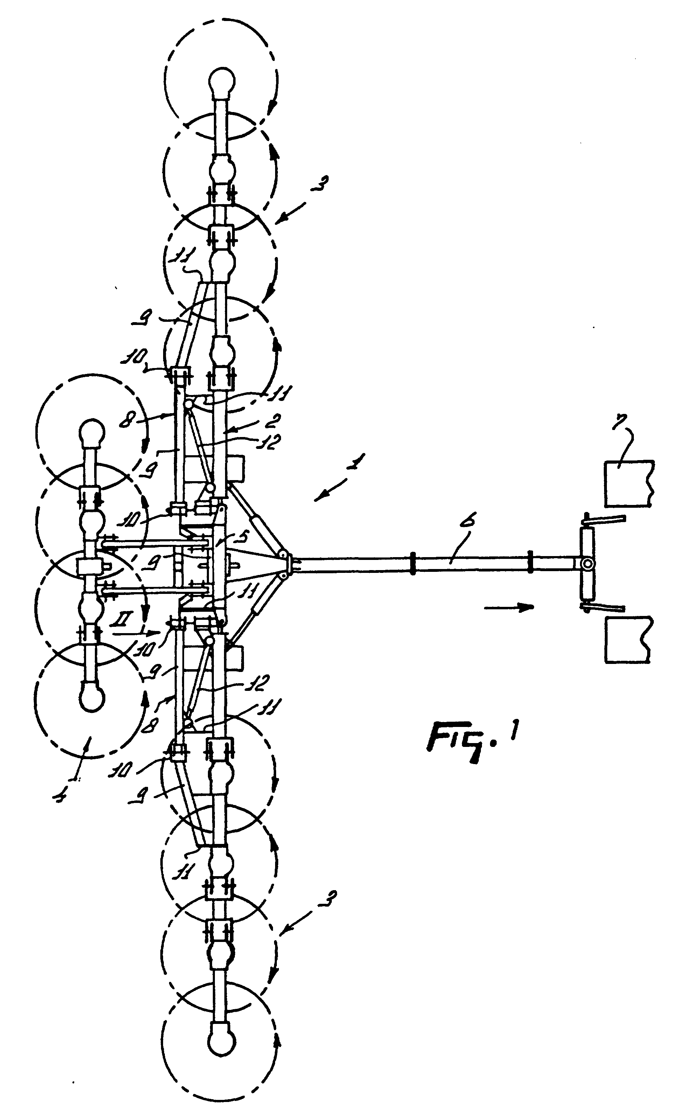

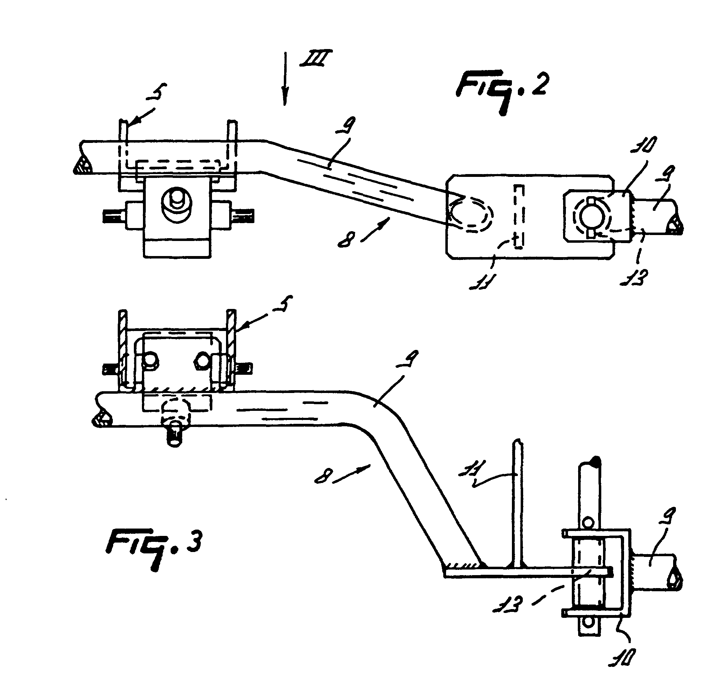

Figure 1 is a plan view of a haymaking machine 1, constituted in the present embodiment by a tedder, which is provided with a first frame 2 comprising two lateral fields 3 that are each provided with four motor-drivable crop working elements 4. The motor-drivable crop working elements 4 are driven by a (non-shown) drive that is fitted in the frame 2. Behind the frame 2 there is further disposed a group of four motor-drivable crop working elements 4. The frame 2 is further provided with a coupling trestle 5 with a drawbar 6 that is coupled to the lifting hitch of a tractor 7. Behind the first frame 2 there is disposed a reinforcement frame 8 that stiffens the first frame 2 at least during operation. In the present embodiment the reinforcement frame 8 comprises five frame sections 9 that are interconnected with the aid of coupling means 10. The reinforcement frame 8 is further connected to the first frame 2 via supports 11 and bars 12 that are adjustable in length. As shown in Figures 2 and 3, the coupling means 10 comprise a hinged connection which, in the present embodiment, is designed as a fork connection 13. For bringing the haymaking machine 1 into the transport position, both the lateral fields 3 and the frame sections 9 with the fork connections 13 are folded up.

## Claims

1. A haymaking machine (1), in particular a tedder, provided with a first frame (2) with motor-drivable crop working elements (4), wherein at least during operation of the haymaking machine (1) the first frame (2) is provided with an additional reinforcement frame (8) comprising at least a first and a second frame section (9) which are interconnected in the operating position with the aid of coupling means (10), said coupling means (10) being designed such that, for the purpose of bringing the haymaking machine (1)into the transport position, the frame sections (9) are movable relative to each other, **characterized in that** the coupling means (10) comprise a U-shaped or V-shaped frame section.

2. A haymaking machine as claimed in claim 1, **characterized in that** the coupling means (10) comprise a hinged connection.

3. A haymaking machine as claimed in claim 2, **characterized in that** the hinged connection is designed as a fork connection (13).

4. A haymaking machine as claimed in any one of the preceding claims, **characterized in that** the reinforcement frame (8) is disposed at some distance from the first frame (2).

5. A haymaking machine as claimed in claim 4, **characterized in that** the reinforcement frame (8) is connected to the first frame (2) by means of at least one support (11).

6. A haymaking machine as claimed in any one of the preceding claims, **characterized in that** the U-shaped or V-shaped frame section is located near the middle of the haymaking machine (1).

7. A haymaking machine as claimed in any one of the preceding claims, **characterized in that** the U-shaped or V-shaped frame section is connected to a coupling trestle (5) by means of which the haymaking machine (1) can be coupled to a tractor (7) or a similar vehicle.

8. A haymaking machine as claimed in any one of the preceding claims, **characterized in that**, viewed in the direction of travel of the haymaking machine (1), obliquely arranged draw bars (12), which are preferably adjustable in length, are disposed between the first frame (2) and the reinforcement frame (8).

9. A haymaking machine as claimed in any one of the preceding claims, **characterized in that**, viewed in the direction of travel of the haymaking machine (1), the reinforcement frame (8) is located behind the first frame (2).

10. A haymaking machine as claimed in any one of the preceding claims, **characterized in that** the reinforcement frame) is disposed across at least half of the width of the haymaking machine.

11. A haymaking machine as claimed in any one of the preceding claims, **characterized in that** the reinforcement frame (8) comprises five frame sections (9).

12. A haymaking machine as claimed in any one of the preceding claims, **characterized in that** the first frame (2) and the reinforcement frame (8) are located in one horizontal plane.

13. A haymaking machine as claimed in any one of the preceding claims, **characterized in that**, in the operating position of the haymaking machine (1), the reinforcement frame (8) is 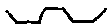 -shaped in plan view.

14. A haymaking machine as claimed in any one of the preceding claims, **characterized in that** the haymaking machine (1) comprises at least eight drivable crop working elements (4).

15. A haymaking machine as claimed in any one of the preceding claims, **characterized in that**, for bringing the haymaking machine (1) into the transport position, at least a part of the first frame (2) and a number of frame sections (9) of the reinforcement frame (8) are capable of being folded up.

## Patentansprüche

1. Heuwerbungsmaschine (1), insbesondere Zetter, der mit einem ersten Rahmen (2) mit motorisch antreibbaren Gutbearbeitungselementen (4) versehen ist, wobei der erste Rahmen (2) zumindest im Betrieb der Heuwerbungsmaschine (1) mit einem zusätzlichen Verstärkungsrahmen (8) versehen ist, der mindestens ein erstes und ein zweites Rahmenteilstück (9) umfaßt, die in der Arbeitslage durch Anschlußvorrichtungen (10) miteinander verbunden sind, wobei die Anschlußvorrichtungen (10) derart ausgebildet sind, daß zum Einstellen der Heuwerbungsmaschine (1) in die Transportlage die Rahmenteilstücke (9) relativ zueinander beweglich sind, **dadurch gekennzeichnet, daß** die Anschlußvorrichtungen (10) ein U-förmiges oder V-förmiges Rahmenteilstück umfassen.

2. Heuwerbungsmaschine nach Anspruch 1,
**dadurch gekennzeichnet, daß** die Anschlußvorrichtungen (10) eine Gelenkverbindung umfassen.

3. Heuwerbungsmaschine nach Anspruch 2,
**dadurch gekennzeichnet, daß** die Gelenkverbindung als Gabelverbindung (13) ausgeführt ist.

4. Heuwerbungsmaschine nach einem der vorhergehenden Ansprüche,
**dadurch gekennzeichnet, daß** der Verstärkungsrahmen (8) in einigem Abstand von dem ersten Rahmen (2) angeordnet ist.

5. Heuwerbungsmaschine nach Anspruch 4,
**dadurch gekennzeichnet, daß** der Verstärkungsrahmen (8) mit dem ersten Rahmen (2) durch mindestens eine Stütze (11) verbunden ist.

6. Heuwerbungsmaschine nach einem der vorhergehenden Ansprüche,
**dadurch gekennzeichnet, daß** das U-förmige oder V-förmige Rahmenteilstück nahe der Mitte der Heuwerbungsmaschine (1) angeordnet ist.

7. Heuwerbungsmaschine nach einem der vorhergehenden Ansprüche,
**dadurch gekennzeichnet, daß** das U-förmige oder V-förmige Rahmenteilstück mit einem Anbaubock (5) verbunden ist, mittels dessen die Heuwerbungsmaschine (1) an einen Schlepper (7) oder ein ähnliches Fahrzeug angeschlossen werden kann.

8. Heuwerbungsmaschine nach einem der vorhergehenden Ansprüche,
**dadurch gekennzeichnet, daß** in Arbeitsrichtung der Heuwerbungsmaschine (1) betrachtet schräg angeordnete Zugstangen (12), die vorzugsweise längenverstellbar sind, zwischen dem ersten Rahmen (2) und dem Verstärkungsrahmen (8) angeordnet sind.

9. Heuwerbungsmaschine nach einem der vorhergehenden Ansprüche,
**dadurch gekennzeichnet, daß** in Arbeitsrichtung der Heuwerbungsmaschine (1) betrachtet der Verstärkungsrahmen (8) hinter dem ersten Rahmen (2) angeordnet ist.

10. Heuwerbungsmaschine nach einem der vorhergehenden Ansprüche,
**dadurch gekennzeichnet, daß** der Verstärkungsrahmen über mindestens der Hälfte der Breite der Heuwerbungsmaschine angeordnet ist.

11. Heuwerbungsmaschine nach einem der vorhergehenden Ansprüche,
**dadurch gekennzeichnet, daß** der Verstärkungsrahmen (8) fünf Rahmenteilstücke (9) umfaßt.

12. Heuwerbungsmaschine nach einem der vorhergehenden Ansprüche,
**dadurch gekennzeichnet, daß** der erste Rahmen (2) und der Verstärkungsrahmen (8) in einer horizontalen Ebene angeordnet sind.

13. Heuwerbungsmaschine nach einem der vorhergehenden Ansprüche,
**dadurch gekennzeichnet, daß** der Verstärkungsrahmen (8) in der Arbeitslage der Heuwerbungsmaschine (1) in Draufsicht 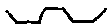 -förmig ist.

14. Heuwerbungsmaschine nach einem der vorhergehenden Ansprüche,
**dadurch gekennzeichnet, daß** die Heuwerbungsmaschine (1) mindestens acht antreibbare Gutbearbeitungselemente (4) umfaßt.

15. Heuwerbungsmaschine nach einem der vorhergehenden Ansprüche,
**dadurch gekennzeichnet, daß** zum Einstellen der Heuwerbungsmaschine (1) in die Transportlage zumindest ein Teil des ersten Rahmens (2) und eine Anzahl von Rahmenteilstücken (9) des Verstärkungsrahmens (8) hochklappbar sind.

## Revendications

1. Machine à fenaison (1), en particulier une faneuse équipée d'un premier cadre (2) avec des éléments destinés à travailler les récoltes actionnables par moteur (4), dans laquelle au moins pendant le fonctionnement de la machine à fenaison (1) le premier cadre (2) est muni d'un cadre supplémentaire de renforcement (8) comprenant au moins une première et une seconde section de cadre (9) qui, dans la position de fonctionnement, sont interconnectées à l'aide de moyens de couplage (10), lesdits moyens de couplage (10) étant conçus de manière à ce que, dans le but d'amener la machine à fenaison (1) en position de transport, les sections de cadre (9) soient mobiles l'une par rapport à l'autre, **caractérisée en ce que** les moyens de couplage (10) comprennent une section de cadre en forme de U ou en forme de V.

2. Machine à fenaison selon la revendication 1, **caractérisée en ce que** les moyens de couplage (10) comprennent une connexion articulée.

3. Machine à fenaison selon la revendication 2, **caractérisée en ce que** la connexion articulée est conçue comme une connexion à chape (13).

4. Machine à fenaison selon l'une quelconque des revendications précédentes, **caractérisée en ce que** le cadre de renforcement (8) est placé à une certaine distance du premier cadre (2).

5. Machine à fenaison selon la revendication 4, **caractérisée en ce que** le cadre de renforcement (8) est connecté au premier cadre (2) au moyen d'au moins un support (11).

6. Machine à fenaison selon l'une quelconque des revendications précédentes, **caractérisée en ce que** la section de cadre en forme de U ou de V se trouve près du milieu de la machine de fenaison (1).

7. Machine à fenaison selon l'une quelconque des revendications précédentes, **caractérisée en ce que** la section de cadre en forme de U ou de V est connectée à un chevalet de couplage (5) au moyen duquel la machine à fenaison (1) peut être couplée à un tracteur (7) ou à un véhicule similaire.

8. Machine à fenaison selon l'une quelconque des revendications précédentes, **caractérisée en ce que**, vu dans le sens de déplacement de la machine à fenaison (1), des barres d'attelage (12) ordonnées en oblique, qui sont de préférence de longueur ajustable, sont placées entre le premier cadre (2) et le cadre de renforcement (8).

9. Machine à fenaison selon l'une quelconque des revendications précédentes, **caractérisée en ce que**, vu dans le sens de déplacement de la machine à fenaison (1), le cadre de renforcement (8) se situe derrière le premier cadre (2).

10. Machine à fenaison selon l'une quelconque des revendications précédentes, **caractérisée en ce que** le cadre de renforcement est disposé à travers la moitié au moins de la largeur de la machine à fenaison.

11. Machine à fenaison selon l'une quelconque des revendications précédentes, **caractérisée en ce que** le cadre de renforcement (8) comprend cinq sections de cadre (9).

12. Machine à fenaison selon l'une quelconque des revendications précédentes, **caractérisée en ce que** le premier cadre (2) et le cadre de renforcement (8) se situent sur un plan horizontal.

13. Machine à fenaison selon l'une quelconque des revendications précédentes, **caractérisée en ce que**, dans la position de fonctionnement de la machine à fenaison (1), le cadre de renforcement (8) a, selon une vue en plan, une forme de 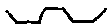 .

14. Machine à fenaison selon l'une quelconque des revendications précédentes, **caractérisée en ce que** la machine à fenaison (1) comprend au moins huit éléments destinés à travailler les récoltes actionnables (4).

15. Machine à fenaison selon l'une quelconque des revendications précédentes, **caractérisée en ce que** pour amener la machine à fenaison (1) en position de transport, une partie au moins du premier cadre (2) et un certain nombre de sections de cadre (9) du cadre de renforcement (8) peuvent être repliés.
